# EUROPÄISCHE PATENTSCHRIFT

(11) **EP 4 124 765 B1**
(45) Veröffentlichungstag und Bekanntmachung des Hinweises auf die Patenterteilung: **27.03.2024**
(21) Anmeldenummer: 22187056.1
(22) Anmeldetag: 26.07.2022
(51) Int. Cl.: F16B 19/06

(54) **STANZNIET UND VERFAHREN ZUM STANZNIETEN MINDESTENS ZWEIER BAUTEILE**
PUNCH RIVET AND METHOD FOR PUNCH RIVETTING AT LEAST TWO COMPONENTS
RIVET À ESTAMPER ET PROCÉDÉ DE RIVETAGE PAR ESTAMPAGE D'AU MOINS DEUX COMPOSANTS

(30) Priorität: 30.07.2021 DE 102021119824
(43) Veröffentlichungstag der Anmeldung: 01.02.2023
(73) Patentinhaber: Fraunhofer-Gesellschaft zur Förderung der angewandten Forschung e.V., 80686 München (DE)
(72) Erfinder: Grimm, Thomas, 09126 Chemnitz (DE)
(74) Vertreter: Grünecker Patent- und Rechtsanwälte PartG mbB

(56) Entgegenhaltungen:
- DE-A1-102018 004 563

## Beschreibung

### Technisches Gebiet

Die vorliegende Erfindung betrifft einen Stanzniet und ein Verfahren zum Stanznieten mindestens zweier Bauteile. Das Verfahren betrifft das lösbare Fügen von Fügepartnern wie beispielsweise Blechlagen, Kunststoffteilen, Leder oder Faserverbundwerkstoffen.

Fügeverfahren können allgemein unter anderem durch ihr Anforderungsprofil in lösbar, bedingt lösbar und nicht lösbar unterteilt werden. Eine andere Einteilung kann durch die Zugehörigkeit zu bestimmten Fertigungstechniken erfolgen. So gibt es die Fügeverfahren, die unter die Gliederung des "Fügen durch Umformen" eingeordnet sind. Sie funktionieren nach dem Prinzip des Kraft- und/oder Formschlusses, in dem eines oder alle zu fügenden Werkstoffe und/oder die Hilfsfügeelemente plastisch, also irreversibel umgeformt werden. Aus diesem Grund sind diese Fügeverbindungen nach aktuellem Stand der Technik größtenteils nicht oder nur bedingt lösbar. Hilfsfügeteile sind beispielsweise selbststanzende und schneidende Niete, Stanzbolzen und gewindefurchenden- oder gewindeformenden Schrauben, die keine zuvor eingebrachten Löcher benötigen.

Das Stanznieten ist ein einstufiger, doppelseitiger Fügeprozess, wobei ein Stanzniet als Fügeelement verwendet wird. Beim Stanznieten werden die Fügepartner ohne vorheriges Lochen in einem kombinierten Stanz- und Umformvorgang durchgestanzt und gefügt. Zum Nieten sind eine werkstückspezifische Halterung mit Fügestempel sowie eine Matrize als Gegenhalter notwendig. Das Design des Niets und der Matrize, die verwendet werden, bestimmt zusammen mit dem Material, das vernietet wird, die Stärke und Widerstandseigenschaften der hergestellten Verbindung. Herkömmlicherweise ist das Stanznieten als ein nicht lösbares Fügeverfahren anzusehen. Es dient zum unlösbaren kraft- und formschlüssigen Fügen von Blechteilen mit speziellen Stanznieten als Verbindungselement. Das Lösen von derart gefügten Bauteilen durch Entfernen des Stanzniet führt meist zur Beschädigung sowohl der Bauteile und des Niets. Eine Wiederverwendbarkeit des Niets ist dabei gewöhnlich nicht vorgesehen.

Ein Lösungsansatz zum aufwandsarmen und bauteilschonenden Herauslösen der Stanznieten ist die Verwendung von Stanznieten mit Gewindegang oder Umfangsrillen auf der Mantelfläche des Nietschafts. Der Stanzbolzen mit Mantelstruktur mit Gewinde oder in Form von radial umlaufenden Rillen werden mit teilweise erhöhter Fügegeschwindigkeit durch rein translatorische Bewegung gesetzt und nutzen hierbei die elastische Rückfederung der Fügepartner zur Verbindungserzeugung aus. Die sich hierbei einstellende Klemmkraft beruht allein auf der elastischen Rückfederung des matrizenseitigen Fügepartnerwerkstoffs. Anschließend kann der Stanzniet durch rotatorische Bewegung aus der Fügestelle der Fügepartner herausgedreht werden.

### Beschreibung des Stands der Technik

Stanznietverfahren zum Fügen von Fügepartnern mit Stanznieten einschließlich eines Gewindegangs oder Umfangsrillen sind im Stand der Technik bekannt.

In DE 102 59 370 B3 ist ein Stanzniet mit einem Nietkopf, einem kleineren angrenzenden Nietschaftdurchmesser mit Umfangsrillen und einer im Durchmesser noch kleineren flachen Stanzfläche oder mit konischer Spritze beschrieben, der überlappend angeordnete Bleche verbinden kann. Die Umfangrippen können hierbei v -förmig, trapezförmig oder dreieckförmig sein ausgebildet sein. Wenn der Stanzniet gesetzt wird, dringt das Bauteilmaterial im Nachbarbereich um das Stanzloch des Stanzniets in die Umfangsrippen ein.

Hierbei tritt der Nachteil auf, dass zwar Blechmaterial zwischen Umfangsrippen eindringt aber der Nachbarbereich um das Stanzloch irreversibel aufgeweitet wird. Dies führt bereits beim Setzen des Stanzniets zu einer geringeren Haltekraft der Umfangsrippen. Zudem ist kein bauteilschonendes Herauslösen des Stanzniets aus den gefügten Bauteilen durch Rotation vorgesehen. Ein Lösen der Fügestelle ist nicht vorgesehen.

In DE 10 2018 004 563 A1 ist ein Stanzniet und Verfahren zum Stanznieten zweier Bauteile beschrieben. Der Stanzniet besteht aus einem Nietkopf, einem zylinderförmigen Nietschaft mit Gewindestruktur und einem Mitnahmeprofil im Nietkopf. An einem dem Nietkopf gegenüberliegenden Ende des Nietschafts ist ein Stanzaufsatz angeordnet der stoffschlüssig mit dem Nietschaft verbunden ist. Der Stanzaufsatz führt beim Einpressen des Stanzniets an der Stanzposition dazu, dass es an der Seite des Nietschafts zu Materialfluss in das Gewinde kommt. Somit wird der Kraft- und Formschluss durch Rückverformung des matrizenseitigen Fügepartners am Ende des Fügeprozesses in das Gewinde des Stanzniets erzeugt. Der Stanzniet kann mittels Werkzeug entgegen der Stanzrichtung entlang des Gewindehals herausgeschraubt werden und der eingestanzte Stanzniet kann beschädigungsfrei aus den beiden Bauteilen gelöst werden, sodass dieser zum Stanznieten zweier weiterer Bauteile wiederverwendet werden kann
Hierbei treten die Nachteile auf, dass der festigkeitssteigernde Materialfluss der Bauteile lediglich im unteren Abschnitt des Gewindes stattfindet. Dies führt zur Inhomogenität des Gewindegangs und daher zu einer ungleichen Kraftverteilung auf die zu fügenden Bauteile. Zudem wird nicht das gesamte Kraftschluss-Potential des Gewindegangs ausgeschöpft.

Der vorliegenden Erfindung liegt die Aufgabe zugrunde, die aus dem Stand der Technik bekannten Probleme zu lösen und ein Stanznietverfahren zur zuverlässigen und reversiblen Fügung von Bauteilen bereitzustellen.

Zur Lösung der vorstehend definierten Aufgabe offenbart die vorliegende Erfindung ein Stanzniet zum Stanznieten mindestens zweier Bauteile. Der Stanzniet umfasst einen Nietkopf mit einem Mitnahmeprofil; einen sich vom Nietkopf erstreckenden Nietschaft mit einer Nietstanzkante und einem zwischen Nietstanzkante und Nietkopf angeordneten Gewinde. Der Stanzniet ist dadurch gekennzeichnet, dass der Nietschaft mindestens eine Nietnut aufweist, die das Gewinde und gegebenenfalls die Nietstanzkante unterbricht, wobei der Durchmesser eines Bodens der mindestens einen Nietnut gleich dem Gewindekerndurchmesser des Gewindes ist.

Hierdurch ergibt sich der vorteilhafte Effekt, dass durch die Nietnuten des erfindungsgemäßen Stanzniets ein radialer Materialfluss entlang des Nietschafts ermöglicht wird. Dadurch kann es leichter zu einem radialen Werkstofffluss der Bauteile kommen, der die Gewindenut und die senkrechte Nietnut ausfüllt und sich damit die Gewindeform einformt. Die ausreichende Tiefe der Nuten führt zu einem stufenlosen Fließvorgang des Materials von den Nietnuten in die Gewindegänge. Somit kann der Füllgrad des Gewindes durch Bauteilmaterial weiter erhöht werden. Folglich ist der Formschluss der Verbindung erzeugt. Gleichzeitig verhindert der Werkstofffluss in die z.B. senkrecht verlaufende Nietnut ein ungewolltes Lösen der Verbindung im Betriebsfall.

Vorteilhafte Weiterbildungen der Erfindung sind Gegenstände der abhängigen Ansprüche.

Es kann von Vorteil sein, wenn der Stanzniet einen Nietkopf aufweist, der ein Senkkopf mit Kegel- oder Kugelform oder ein Flachkopf mit Zylinder-, Kegel- oder Kugelform ist. Somit kann der Nietkopf des Stanzniets an die Umgebung der Fügestelle und an das Material der zu fügenden Bauteile angepasst gestaltet sein.

Es kann sich als nützlich erweisen, wenn das Mitnahmeprofil als Innensechskant, Innensechsrund, Kreuz, Schlitz oder als Vieleck gestaltet ist. Somit weist der Nietkopf eine definierte Aussparung für externe Werkzeuge auf und kann mit einer Vielzahl von verschiedenen Werkzeugen am Nietkopf betätigt werden. Das erhöht die Anzahl an möglichen Werkzeugen für das Stanzen sowie das Herausdrehen des Stanzniets.

Es kann hilfreich sein, dass das Gewinde als metrisches ISO-Gewinde (M), ISO-Feingewinde (MF), Trapezgewinde (Tr), Amerikanisches Gewinde (UNC), Amerikanisches Feingewinde (UNF), Amerikanisches Spezialgewinde (UNS), Rohrgewinde, Whitworth-Gewinde (BSW/WW, BS BSP/G, BSPT/R), Sägezahngewinde (SZ), Sondergewinde ohne Normung oder Links- oder Rechtsgewinde ausgebildet ist, wobei sich das Gewinde vorzugsweise über mindestens 50%, 75% oder 90% der Länge des Nietschafts zwischen Nietkopf und Nietstanzkante erstreckt und wobei das Gewinde bevorzugt eingängig oder mehrgängig ausgebildet ist. Somit können die Gewindeart und die Länge des Gewindes je nach Anwendungsfall variieren. Zudem kann die Gewindeart in Abhängigkeit der Menge an Materialfluss gewählt werden.

Es kann sich als vorteilhaft erweisen, dass die Nietstanzkante geschlossen oder durch die mindestens eine Nietnut unterbrochen ist und/oder einen scharfkantigen oder durch eine Fase oder einen Radius gekennzeichneten Übergang von dem Nietschaft zu einer Nietunterseite aufweist. Je nach Anwendungsfall verbessert dies die Stanzeigenschaften des Stanzniets oder erleichtert den Materialfluss von einer Unterseite des Nietschafts in die Nietnut.

Es kann nützlich sein, wenn die mindestens eine Nietnut spiralförmig, parallel oder schräg zur Nietachse verläuft und/oder einen recht- oder dreieckigen oder runden Querschnitt aufweist und/oder sich über mindestens 50%, 75% oder 90% der Länge des Nietschafts erstreckt und/oder sich über 1 bis 10% oder 2 bis 5% der Umfangslänge des Nietschafts erstreckt. Somit können die Fließbedingungen und die Fließrichtung des Materialflusses beeinflusst werden. Zudem können durch den Materialfluss in den Nietnuten entstehende Verstärkungsrippen gezielt platziert werden, um die Festigkeit des Stanzniets weiter zu erhöhen.

Es kann sich als sinnvoll erweisen, wenn mehrere Nietnuten auf der Umfangsfläche des Nietschafts angeordnet sind, vorzugsweise in regelmäßigen Winkelabständen um die Nietachse und/oder in einem symmetrischen Muster. Durch die gleichmäßige Anordnung der Nietnuten kann eine homogene Verteilung des Materialflusses in radialer Richtung um den Nietschaft gewährleistet werden. Die gleichmäßige Verteilung des Materials im Gewinde des Stanzniets bietet somit einen umfänglichen Kraftschluss des Stanzniets in den Bauteilen. Zusätzlich kann durch die Füllung der vorzugsweise senkrechten Nuten eine Verdrehsicherung der zu verbindenden Bauteile um den sonst rotationssymmetrischen Nietschaft erfolgen.

Es kann sich als sinnvoll erweisen, dass der Außendurchmesser der Nietstanzkante mindestens so groß ist wie der Außendurchmesser des Außengewindes. Somit kann der Außendurchmesser eines Stanzlochs klar definiert werden und eine unkontrollierte Aufweitung des Stanzlochs durch den Nietschaft vermieden werden. Ein daraus folgendes Einreißen der Bauteile wird somit verhindert. Eine Nietstanzkante mit einem größeren Durchmesser als dem Außendurchmesser des Außengewindes bietet entlang des Nietschafts zusätzlichen Hohlraum durch den sich das Bauteilmaterial beim Umformen der Bauteile verteilen kann.

Die vorliegende Erfindung offenbart zudem eine Anordnung umfassend mindestens zwei Bauteile, die durch wenigstens einen besagten Stanzniet verbunden sind, wobei der wenigstens eine Stanzniet aus einem härteren Werkstoff als die mindestens zwei Bauteile besteht. Somit kann garantiert werden, dass sich die Bauteile um den Stanzniet formen, während dieser seine Form beibehält.

Die vorliegende Erfindung offenbart zudem ein Verfahren zum Stanznieten mindestens zweier Bauteile unter Verwendung eines oben genannten Stanzniets. Das Verfahren umfasst die folgenden aufeinanderfolgenden Schritte: Stanzen der Bauteile durch den Stanzniet, sodass der Stanzniet die Bauteile durchdringt und vorzugsweise seine Endposition in den zu fügenden Bauteilen erreicht hat. Umformen wenigstens eines der Bauteile, insbesondere eines nietschaftseitigen Bauteils, zur Erzeugung eines radialen Materialflusses, der in das Gewinde und die mindestens eine Nietnut des Stanzniets eindringt, um den Stanzniet vorzugsweise kraft- und formschlüssig in den Bauteilen zu verankern, bevorzugt indem durch Umformung in den Bauteilen ein Hinterschnitt und ein Innengewinde hergestellt wird.

Es kann aber auch von Nutzen sein, wenn Schritt I wenigstens einen der folgenden Teilschritte umfasst: Positionieren und Fixieren der Bauteile zwischen einem Niederhalter und einer Matrize; Bewegen des Stanzniets durch einen von dem Niederhalter geführten Fügestempel, sodass die Nietstanzkante den Materialausschuss aus den Bauteilen heraustrennt; Aufnehmen des Materialausschusses durch die Matrize und Herabfahren des Fügestempels, bis der Stanzniet seine stempelseitige Endposition erreicht hat. Durch die gezielte Auslegung der Matrize kann die Gewindeerzeugung definiert erfolgen.

Es kann aber auch von Nutzen sein, wenn Schritt II wenigstens einen der folgenden Teilschritte umfasst: Einprägen eines Prägerings der Matrize in das matrizenseitige Bauteil, durch synchrones Herabfahren des Fügestempels und des Niederhalters und Entnahme der verbundenen Bauteile nach Abheben des Niederhalters und des Fügestempels. Im Allgemeinen wird in Schritt II vorrangig das nietschaftseitige Bauteil umgeformt um einen Hinterschnitt und ein Gewinde in den Bauteilen herzustellen.

Es kann sich als vorteilhaft erweisen, dass das Verfahren einen weiteren Schritt III der Einleitung eines Drehmoments über das Mitnahmeprofil am Nietkopf des Niets zum Lösen der Fügeverbindung umfasst. Dabei wird die Verbindung der Bauteile durch Rotation des Stanzniets in Entformungsrichtung des Gewindes gelöst.

Die oben beschriebene Erfindung löst das Problem der Lösbarkeit und Wiederverwendbarkeit von selbststanzenden Nieten in Kombination mit mehr einstellbaren Prozessparametern über die Werkzeugauslegung und einer Möglichkeit zur Einstellung der Sicherung gegen Lockern und Lösen der Verbindung im Betrieb.

Weitere bevorzugte Weiterbildungen der Erfindung ergeben sich durch Kombinationen der Merkmale, die in der Beschreibung, den Ansprüchen und den Figuren offenbart sind.

### Kurze Beschreibung der Figuren

Es zeigen:
Fig. 1 eine perspektivische Ansicht einer ersten Ausführungsform eines erfindungsgemä-ßen Stanzniets.
Fig. 2 eine perspektivische Ansicht einer zweiten Ausführungsform eines erfindungsgemäßen Stanzniets.
Fig. 3 eine perspektivische Ansicht einer dritten Ausführungsform eines erfindungsgemä-ßen Stanzniets.
Fig. 4 eine perspektivische Ansicht einer vierten Ausführungsform eines erfindungsgemä-ßen Stanzniets.
Fig. 5 einen Verfahrensablauf eines Verfahrens zum Stanznieten mindestens zweier Bauteile unter Verwendung eines Stanzniets, eines Niederhalters, eines Fügestempels und einer Matrize.

### Detaillierte Beschreibung der bevorzugten Ausführungsformen

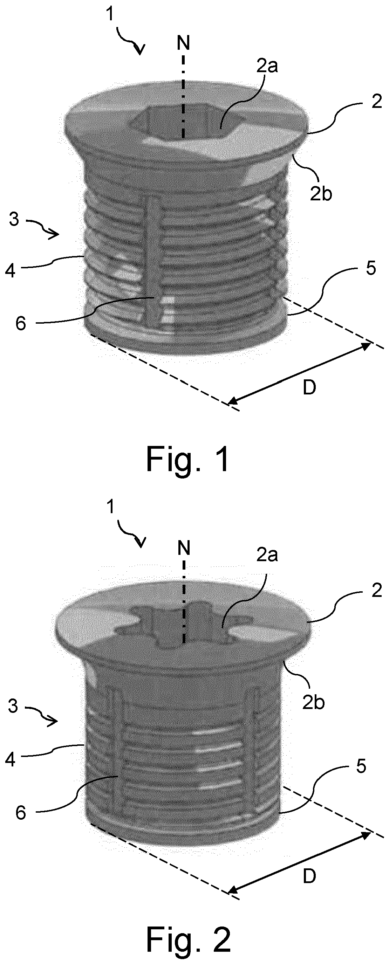

Fig. 1 zeigt eine perspektivische Ansicht einer ersten Ausführungsform eines erfindungsgemäßen Stanzniets 1. Der Stanzniet 1 umfasst einen Nietkopf 2 mit einem Mitnahmeprofil 2a und einen sich vom Nietkopf 2 erstreckenden Nietschaft 3. Der Nietkopf 2 ist ein Flachkopf mit Kegelform 2b. Das Mitnahmeprofil 2a ist eine Innensechskant-Aussparung. Der Nietschaft 3 ist im Wesentlichen zylinderförmig und verläuft entlang einer Nietachse N. Am distalen Ende des Nietschafts 3 weist der Stanzniet 1 eine Nietstanzkante 5 auf. Der Außendurchmesser D der Nietkante 5 ist kleiner als der Außendurchmesser des Nietkopfs 2. Auf dem Nietschaft 3 zwischen der Nietstanzkante 5 und dem Nietkopf 2 ist ein Gewinde 4 angeordnet. Das Gewinde 4 ist ein eingängiges metrisches ISO-Gewinde (M) welches sich über die Gesamtlänge des Nietschafts 3 erstreckt.

Der Nietschaft 3 der ersten Ausführungsform des Stanzniets 1 umfasst, wie in Fig. 1 gezeigt, auf der Umfangsfläche des Nietschafts 3 mehrere Nietnuten 6, die das Gewinde 4 unterbrechen. Das Einpressen des entsprechenden Stanzniets 1 in zu fügenden Bauteile bewirkt einen gleichzeitigen radialen Materialfluss des Bauteilmaterials in die Nietnuten 6 und in das Gewinde 4 des Stanzniets 1. Zusätzlich kann im Prozessverlauf der Strukturfüllung über die Nietnuten 6 das Material in das Gewinde 4 gelangen. Die Nietnuten 6 verlaufen in Form von langgezogenen Aussparungen parallel zur Nietachse N. Somit ergeben sich in den Nietnuten 6 Verstärkungsrippen aus dem einfließenden Material, welche die Festigkeit des Stanzniets in den Bauteilen und die Fügekraft der Bauteile zueinander verstärkt.

Die Nietnuten 6 weisen eine Tiefe auf, so dass der Boden der Nietnuten 6 in kleinerer oder geringerer Tiefe als der Kerndurchmesser des Gewindes 4 liegt (d.h. der Radius des Nutbodens ist größer als der Radius bzw. halbe Durchmesser des Gewindekerns). Die Nietnuten 6 können aber auch eine Tiefe aufweisen, so dass der Boden der Nietnuten 6 in gleicher oder größerer Tiefe als der Kerndurchmesser des Gewindes 4 liegt (d.h. der Radius des Nutbodens ist gleich wie oder kleiner als der Radius bzw. halbe Durchmesser des Gewindekerns; nicht dargestellt). Dies führt zur Möglichkeit eines stufenlosen Fließvorgangs des Materials von den Nietnuten 6 in die Gewindegänge des Gewindes 4.

In der ersten Ausführungsform weist der Stanzniet 1 vier Nietnuten 6 auf, die in regelmäßigen Winkelabständen und in einem symmetrischen Muster, d.h. im 90° Abstand zueinander, auf der Mantelfläche des Nietschafts 3 angeordnet sind. Somit kann ein Materialfluss in radialer Richtung homogen auf die Nietnuten 6 gewährleistet werden. Die gleichmäßige Weiterverteilung des Materials im Gewinde 4 des Stanzniets 1 bietet somit einen umfänglichen Kraftschluss des Stanzniets 1 in den Bauteilen. Je nach Fließfähigkeit des Bauteilmaterials und dem Grad der Umformung können weitere und weniger Nietnuten 6 um am Nietschaft 3 angeordnet sein.

Die Nietnuten 6 weisen einen rechteckigen Querschnitt auf. Dieser ermöglich eine maximale Querschnittsfläche, um größtmöglichen Materialfluss zu gewährleisten. Zudem ist die Fertigung von Nuten mit rechteckigem Querschnitt leicht und kostengünstig.

Die Nietnuten 6 erstrecken sich über nahezu die gesamte Länge des Nietschafts 3. Die Nietnuten 6 enden vor dem distalen Ende des Nietschafts 3 an der Nietstanzkante 5 und unterbrechen diese nicht. In anderen Worten, die Nietstanzkante ist um den Nietschaft 3 umlaufend ausgebildet und in sich geschlossen. Ein Außendurchmesser D der Nietstanzkante 5 ist so groß ist wie der Außendurchmesser D des Außengewindes 4. Dies führt zu einem Stanzloch welches dem Außendurchmesser D des Außengewindes 4 entspricht. Dadurch kommt es nicht zu einer unnötigen Bauteilaufweitung und der durch Materialfluss zu füllende Raum im und um das Gewinde 4 kann minimiert werden. Die Nietstanzkante 5 weist in Richtung einer Nietunterseite einen scharfkantigen Übergang auf. Somit kann ein definiertes Stanzloch in den Bauteilen leichter aufgebracht werden.

Fig. 2 zeigt eine perspektivische Ansicht einer zweiten Ausführungsform eines erfindungsgemäßen Stanzniets 1. Der Nietkopf 2 ist ein Flachkopf mit Kugelform 2b. Das Mitnahmeprofil 2a ist eine Innensechsrund-Aussparung. Am distalen Ende des Nietschafts 3 weist der Stanzniet 1 eine Nietstanzkante 5 auf. Der Außendurchmesser D der Nietkante 5 ist kleiner als der Außendurchmesser des Nietkopfs 2. Auf dem Nietschaft 3 zwischen der Nietstanzkante 5 und dem Nietkopf 2 ist ein Gewinde 4 angeordnet. Das Gewinde 4 ist ein eingängiges ISO-Feingewinde (MF) welches sich über den Großteil des Nietschaft 3 bis hin zur Nietstanzkante 5 erstreckt.

Der Nietschaft 3 der zweiten Ausführungsform des Stanzniets 1 umfasst, wie in Fig. 2 gezeigt, auf der Umfangsfläche des Nietschafts 3 mehrere Nietnuten 6, die das Gewinde 4 unterbrechen und sich bis in eine Fläche der Kugelform 2b des Nietkopfs 2 erstrecken. Die Nietnuten 6 weisen eine Tiefe auf, so dass der Boden der Nietnuten tiefer als der Gewindekern des Gewindes 4 liegt. Die Nietnuten 6 weisen einen rechteckigen Querschnitt auf. In der zweiten Ausführungsform weist der Stanzniet 1 ebenfalls vier Nietnuten 6 auf, die im 90° Abstand zueinander auf der Mantelfläche des Nietschafts 3 angeordnet sind. Die Nietnuten 6 enden vor dem distalen Ende des Nietschafts 3 an der Nietstanzkante 5 und unterbrechen diese nicht. In anderen Worten, die Nietstanzkante 5 ist ebenfalls geschlossen. Ein Außendurchmesser D der Nietstanzkante 5 ist so groß ist wie der Außendurchmesser D des Außengewindes 4. Die Nietstanzkante 5 weist in Richtung einer Nietunterseite einen scharfkantigen Übergang auf.

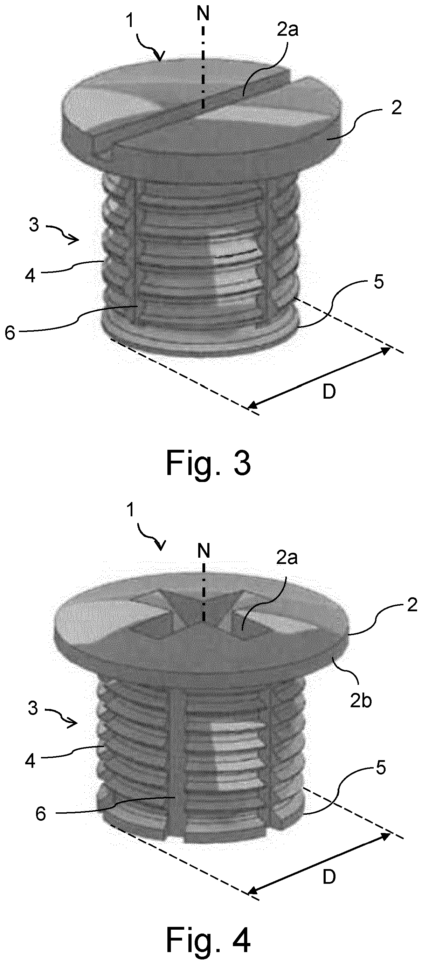

Fig. 3 zeigt eine perspektivische Ansicht einer dritten Ausführungsform eines erfindungsgemäßen Stanzniets 1. Der Nietkopf 2 ist ein Flachkopf mit Zylinderform 2b. Das Mitnahmeprofil 2a ist eine Schlitz-Aussparung. Das Gewinde 4 ist ein eingängiges Rohrgewinde, welches sich über den Großteil des Nietschafts 3 bis hin zur Nietstanzkante 5 erstreckt.

Der Nietschaft 3 der ersten Ausführungsform des Stanzniets 1 umfasst, wie in Fig. 3 gezeigt, auf der Umfangsfläche des Nietschafts 3 mehrere Nietnuten 6, die das Gewinde 4 unterbrechen. Die Nietnuten 6 verlaufen in Form von langgezogenen Aussparungen parallel zur Nietachse N. Die Nietnuten 6 weisen eine Tiefe auf, so dass der Boden der Nietnuten 6 tiefer als der Kerndurchmesser des Gewindes 4 liegt. Die Nietnuten 6 weisen einen rechteckigen Querschnitt auf. In der dritten Ausführungsform weist der Stanzniet 1 ebenfalls vier Nietnuten 6 auf, die im 90° Abstand zueinander auf der Mantelfläche des Nietschafts 3 angeordnet sind.

Fig. 4 zeigt eine perspektivische Ansicht einer vierten Ausführungsform eines erfindungsgemäßen Stanzniets 1. Der Nietkopf 2 ist ein Flachkopf mit Zylinderform 2b. Das Mitnahmeprofil 2a ist eine Kreuz-Aussparung. Das Gewinde 4 ist ein eingängiges Sägezahngewinde (SZ) welches sich über die Mantelfläche des Nietschafts 3 erstreckt.

Der Nietschaft 3 der vierten Ausführungsform des Stanzniets 1 umfasst, wie in Fig. 4 gezeigt, auf der Umfangsfläche des Nietschafts 3 mehrere Nietnuten 6, die das Gewinde 4 unterbrechen. Die Nietnuten 6 weisen eine Tiefe auf, so dass der Boden der Nietnuten 6 tiefer als der Kerndurchmesser des Gewindes 4 liegt. In der vierten Ausführungsform weist der Stanzniet 1 acht Nietnuten 6 auf die gleichmäßig, d.h. im 45° Abstand zueinander auf der Mantelfläche des Nietschafts 3 angeordnet sind. Die Nietnuten 6 erstrecken sich über die gesamte Länge des Nietschafts 3.

Die Nietnuten 6 unterbrechen am distalen Ende des Nietschafts 3 die Nietstanzkante 5. In anderen Worten, die Nietstanzkante 5 ist nicht geschlossen. Die Nietstanzkante 5 weist in Richtung einer Nietunterseite eine durch eine Fase oder einen Radius gekennzeichneten Übergang auf. Diese Konfiguration der Nietnuten 6 und des abgefasten bzw. abgerundeten Übergangs führen zu einer Verringerung des Fließwiderstands für den Materialfluss. Somit kann das Bauteilmaterial in einem Umformprozess leichter von unterhalb des Stanzniets 1 in die Nietnuten 6 und das Gewinde 4 eindringen. Dies führt zu einer höheren Verdichtung des Materials in den Nietnuten 6 und dem Gewinde 4, was zu höherer Festigkeit des Stanzniets 1 in den zu fügenden Bauteilen führt.

Die Merkmale des Stanzniets 1 sind nicht auf die in den vier Ausführungsformen gezeigten Merkmale begrenzt. Der Nietkopf 2 kann auch als ein Senkkopf mit Kegel- oder Kugelform ausgebildet sein. Zudem kann das Mitnahmeprofil 2a als Vieleck gestaltet sein. Der Nietkopf 2 und das durch die Aussparung definierte Mitnahmeprofil 2a sind dazu konfiguriert, dass eine Vielzahl von externen Werkzeugen geeignet ist, um den Stanzniet 1 in einem Stanzvorgang einzustanzen und/oder bei einem Lösen der Fügeverbindung herauszudrehen.

Das Gewinde 4 des Stanzniets 1 kann ebenfalls als Trapezgewinde (Tr), Amerikanisches Gewinde (UNC), Amerikanisches Feingewinde (UNF), Amerikanisches Spezialgewinde (UNS), Whitworth-Gewinde (BSW/WW, BS BSP/G, BSPT/R), Sägezahngewinde (SZ), Sondergewinde ohne Normung oder Links- oder Rechtsgewinde, eingängig oder mehrgängig ausgebildet sein. Das Gewinde 4 kann sich auch über lediglich 50%, 75%, 90% oder 100% der Länge des Nietschafts 3 zwischen Nietkopf 2 und Nietstanzkante 5 erstrecken. Hierbei weisen die verschiedenen Gewindetypen und -formen abhängig von den zu verfügenden Materialien und Bauteilen Vorzüge auf. Durch Gewindetyp und -form kann die Menge an verfügbarem Raum, der durch Materialfluss gefüllt wird, je nach Anwendungsfall gezielt beeinflusst werden.

Die Nietnuten 6 können auch spiralförmig oder schräg zur Nietachse N verlaufen. Dies führt zu Verstärkungsrippen aus Bauteilmaterial, welche zudem durch ihre Lage relativ zum Nietschaft weitere Festigkeit geben können. So kann eine spiralförmige Materialrippe in einer spiralförmigen Nietnut 6 einem Herausdrehen des Stanzniets 1 entgegenwirken. Die Nietnuten 6 können auch einen dreieckigen oder runden Querschnitt aufweisen. Dadurch kann eine höhere Fließgeschwindigkeit erreicht werden als bei rechteckigen Querschnittsflächen der Nietnuten 6. Somit kann auch in schwer erreichbare Räume der Nietnuten 6 und des Gewindes 6 Material einfließen. Die Nietnuten 6 können sich auch je nach Anwendungsfall und Fließfähigkeit der zu fügenden Bauteile über 50%, 75%, 90% oder 100% der Länge des Nietschafts 3 erstrecken. Dies verkürzt den Herstellungsprozess der Nietnuten 6.

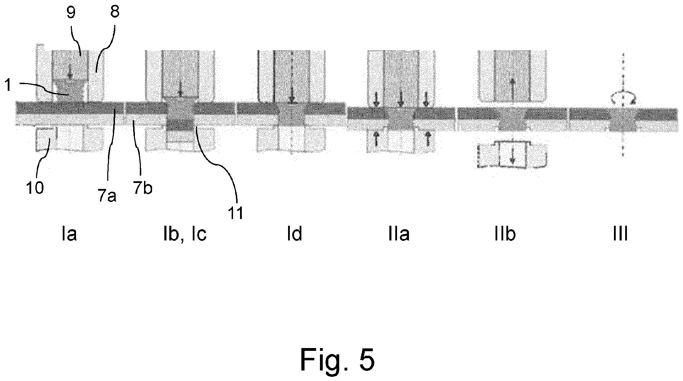

Fig. 5 zeigt einen Verfahrensablauf eines Verfahrens zum Stanznieten mindestens zweier Bauteile 7a und 7b unter Verwendung eines Stanzniets 1, eines Niederhalters 8, eines Fügestempels 9 und einer Matrize 10. Das Verfahren hat zum Ziel, die Anordnung bestehend aus zwei Bauteilen 7a, 7b durch den Stanzniet 1, kraft- und formschlüssig, aber lösbar, zu fügen. Die Bauteile 7a, 7b sind beispielsweise Blechlagen, Kunststoffteile, Leder oder Faserverbundwerkstoffe, können jedoch auch aus anderen Materialien bestehen. Die Bauteile 7a, 7b und der Stanzniet 1 sind aus Werkstoffen geformt, so dass der wenigstens eine Stanzniet 1 aus einem härteren Werkstoff als die mindestens zwei Bauteile 7a, 7b besteht. Dies führt dazu, dass sich der Stanzniet 1 im Stanzvorgang nicht verformt und sich im Umformvorgang lediglich die Bauteile 7a, 7b verformen. Der Stanzniet 1 kann für Bauteilkombinationen aus Stahl-Stahl-Verbindungen, als auch bei Stahl-Aluminium-, Aluminium-Aluminium-Verbindungen sowie allen anderen Kombinationen metallischer und nicht-metallischer Werkstoffe, wie beispielsweise Eisen und Nichteisenmetallen in Kombination mit und ohne faserverstärkten Kunststoffen eingesetzt werden.

Die Fügeverbindung kann hierbei zwei- oder mehrlagig ausgeführt werden. Die Nietabmessungen des Stanzniets 1 richten sich hierbei nach den Anforderungen der Verbindungsfestigkeit und der Gesamtblechdicke und bei mehrlagigen Fügeverbunden nach der Einzelblechdicke der abschließenden Decklagen im Fügeverbund der Bauteile 7a, 7b. Die Nietstanzkante 5 kann sowohl bündig mit dem nietschaftseitigen Bauteil 7b abschließen als auch bis zum Dreifachen der Gesamtdicke der Bauteile 7a, 7b hinausragen, jedoch nur so lang sein, dass der Stanzniet 1 im Stanzprozess nicht ausknickt. Voraussetzung für die Anwendbarkeit von erfindungsgemäßem Stanzniet 1 und dem Stanznietverfahren (unten detaillierter beschrieben) ist die ausreichende Umformbarkeit des nietschaftseitigen Bauteils 7b. Dies kann bei Raumtemperatur, als auch zur Unterstützung des Umformformverhaltens bei Erwärmung oder lokaler Veränderung der Werkstoffeigenschaften stattfinden.

Fig. 5 zeigt den Verfahrensablauf eines Verfahrens zum Stanznieten in Verfahrensschritten. Das Verfahren umfasst mindestens die folgenden zwei aufeinanderfolgenden Gesamtschritte I und II. In einem ersten Schritt I werden die Bauteile 7a, 7b durch den Stanzniet 1 gestanzt, sodass der Stanzniet 1 die Bauteile 7a, 7b durchdringt. In einem zweiten Schritt II wird wenigstens eines der Bauteile 7a, 7b, insbesondere das nietschaftseitige Bauteil 7b umgeformt, so dass ein radialer Materialfluss erzeugt wird, der in das Gewinde 4 und die mindestens eine Nietnut 6 des Stanzniets 1 eindringt, so dass der Stanzniet 1 vorzugsweise kraft- und formschlüssig in den Bauteilen 7a, 7b verankert wird.

Hierbei können, wie in Fig. 5 gezeigt, die Gesamtschritte in weitere Teilschritte unterteilt werden. Der Gesamtschritt I umfasst mindestens einen der folgenden Teilschritte. In Teilschritt Ia werden die Bauteile 7a, 7b zwischen den Niederhalter 8 und die Matrize 10 positioniert und fixiert. Dies dient der sachgemäßen Anordnung der Bauteile 7a, 7b zu einander und der gewünschten Positionierung der Stanzposition.

In Teilschritt Ib wird der Stanzniet 1 durch den von dem Niederhalter 8 geführten Fügestempel 9 bewegt, sodass die Nietstanzkante 5 den Materialausschuss aus den Bauteilen 7a, 7b heraustrennt. Dies dient dem zielgerichteten Ausstanzen eines definierten Stanzlochs in den Bauteilen 7a, 7b.

In Teilschritt Ic wird der Materialausschuss durch die Matrize 10 aufgenommen. Die Matrize 10 weist hierfür eine Durchgangsbohrung auf, die den gleichen oder einen geringfügig grö-ßeren Durchmesser aufweist, als der Stanzniet 1. Somit kann die Matrize 10 den Materialausschuss der Bauteile 7a, 7b aufnehmen und vermeiden, dass dieser den weiteren Umformprozess behindert.

In Teilschritt Id wird der Stanzniet 1 auf seine stempelseitige Endposition in den Bauteilen 7a, 7b gebracht. bis der Nietkopf 2 mit dem stempelseitigen Bauteil 7a bündig ist bzw. die Unterseite eines erhabenen Nietkopfes 2 in Kontakt mit dem nietkopfseitigen Bauteil 7a steht.

Der Gesamtschritt II umfasst mindestens einen der folgenden Teilschritte. In Teilschritt Ila wird ein Prägering 11 der Matrize 10 in das matrizenseitige Bauteil 7b durch synchrones Herabfahren des Fügestempels 10 und des Niederhalters 8 eingeprägt. Der Prägering 11 ist am oberen Ende der Durchgangsbohrung der Matrize 10 angeordnet und hat einen Innendurchmesser wie die Durchgangsbohrung der Matrize 10. Dabei bringt die Matrize, in Fig. 5 durch Pfeile dargestellt, eine entsprechende Gegenkraft auf, um das Umformen der Bauteile 7a, 7b zu gewährleisten. Der Außendurchmesser des Prägerings 11 definiert eine Stufe an der Oberseite der Matrize 10, so dass sich der Prägering 11 von der Oberfläche der Matrize 10 absetzt. Beim Einprägen des Prägerings 11 in das nietschaftseitige bzw. matrizenseitige Bauteil 7b kann die Durchgangsbohrung der Matrize 10 Teile des Stanzniets 1 aufnehmen. Durch das Einprägen des Prägerings 11 in das matrizenseitige Bauteil 7b wird eine Prägekraft auf die umliegende Fläche des Stanzlochs ausgeübt. Dadurch kommt es zur Verdrängung des matrizenseitigen Bauteils 7b und einem radialen Materialfluss, der die Nietnut 6 und das Gewinde 4 des Stanzniets 1 ausfüllt. Folglich ist der Formschluss der Fügeverbindung erzeugt.

Herausforderung in diesem Prozessschritt ist, dass bei Verwendung eines Nietkopfs 3 mit Senkkopf die Kraft für das Einprägen des Nietkopfs 3 nicht höher ist, als die Kraft des Einformens des Prägerings 11 der Matrize 10 in das nietschaftseitige Bauteil 7b. Hierfür kann die Fläche des Prägerings 11 entsprechend ausgelegt werden.

Abweichend von Fig. 5 können Schritt Id und Ila auch anders gestaltet sein. Dabei sind die Matrize 10 und der Prägering 11 geteilt, sodass in Schritt Id des Stanzprozesses matrizenseitig eine ebene Fläche vorliegt. Erst im Prozessschritt Ila folgt dann eine Anhebung der geteilten Matrize 10 hin zum gewünschten Profil mit erhabener Fläche des Prägerings 11.

Durch die gezielte Auslegung der Matrize 10 kann der Materialfluss in das Gewinde 4 und die Nietnuten 6 definiert erfolgen. Gleichzeitig baut der Materialfluss in den Nietnuten 6 Verstärkungsrippen auf, welche zusätzliche Festigkeit im Stanzloch bereitstellen und ein ungewolltes Lösen der Verbindung im Betriebsfall verhindern. Diese Eigenschaft der Gewindesicherung ist ein wichtiges und signifikantes Unterscheidungsmerkmal gegenüber anderen Lösungsansätzen. Über die Auslegung der Nutquerschnittsgeometrie, Anzahl und Anordnung in Kombination mit einer daran angestimmten Prägeringgeometrie kann die zusätzliche Verankerungskraft durch die Verstärkungsrippen aktiv gesteuert und beeinflusst werden. Außerdem kann die Fläche des Prägerings 11 auch abweichend von der Ringfläche eine unrunde, gezackte, wellige oder spezielle ausgeformte Fläche ausbilden, mit speziellen Fasen oder Radien versehen sein oder mikrostrukturiert sein. Dies kann die Fließeigenschaften des Materialflusses weiter verbessern.

In Teilschritt Ilb werden die verbundenen Bauteile 7a, 7b nach Abheben des Niederhalters 8 und des Fügestempels 9 entnommen und die Anordnung ist durch den Stanzniet 1 gefügt.

Soll nach dem Fügeprozess die Verbindung gelöst werden, kann das Verfahren zum Stanznieten einen weiteren Schritt III umfassen. In Schritt III wird ein Drehmoment über das Mitnahmeprofil 2a am Nietkopf 2 des Stanzniets 1 zum Lösen der Fügeverbindung eingeleitet. Dies dient dem Herausdrehen des Stanzniet 1 aus den Bauteilen 7a, 7b zur Auflösung der Fügeverbindung. Hierzu wird ein dem Mitnahmeprofil 2a entsprechendes Werkzeug verwendet. Die hierfür notwendige Kraft ist vom Füllgrad der Nietnuten 6 abhängig und kann über die Auslegung der Nutquerschnittsgeometrie, Anzahl und Anordnung in Kombination mit einer daran angestimmten Prägeringgeometrie aktiv gesteuert und beeinflusst werden. Der herausbrechende Werkstoff wird über die Nietnuten 6 und Gewindegänge des Gewindes 4 auf dem Nietschaft 3 des Stanzniets 1 abgeführt. Das zurückbleibende Gewinde 4 in den Bauteilen 7a, 7b kann anschließend wiederverwendet werden. Ebenso kann der herausgedrehte Stanzniet 1 im Anschluss wiederverwendet werden. Somit ist der Gesamtvorgang des Stanznietens reversibel und es können durch die Wiederverwendung Ressourcen und Kosten gespart werden.

Die Merkmale verschiedener Implementierungsausführungsformen und Teilschritte können kombiniert werden, um weitere Ausführungsformen der Erfindung zu bilden.

### Bezugszeichenliste

- 1: Stanzniet
- 2: Nietkopf
- 3: Nietschaft
- 4: Gewinde
- 5: Nietstanzkante
- 6: Nietnut
- 7,7a,7b: Bauteile
- 8: Niederhalter
- 9: Fügestempel
- 10: Matrize
- 11: Prägering
- D: Außendurchmesser

## Patentansprüche

1. Stanzniet (1) zum Stanznieten mindestens zweier Bauteile (7a, 7b), aufweisend: einen Nietkopf (2) mit einem Mitnahmeprofil (2a); einen sich vom Nietkopf (2) erstreckenden Nietschaft (3) mit einer Nietstanzkante (5) und einem zwischen Nietstanzkante (5) und Nietkopf (2) angeordneten Gewinde (4); **dadurch gekennzeichnet, dass** der Nietschaft (3) mindestens eine Nietnut (6) aufweist, die das Gewinde (4) und gegebenenfalls die Nietstanzkante (5) unterbricht und dass der Durchmesser eines Bodens der mindestens einen Nietnut (6) gleich dem Gewindekerndurchmesser des Gewindes (4) ist.

2. Stanzniet (1) nach Anspruch 1, **dadurch gekennzeichnet, dass** der Nietkopf (2) ein Senckopf mit Kegel- oder Kugelform oder ein Flachkopf mit Zylinder-, Kegel- oder Kugelform ist.

3. Stanzniet (1) nach einem der vorangehenden Ansprüche, **dadurch gekennzeichnet, dass** das Mitnahmeprofil (2a) als Innensechskant, Innensechsrund, Kreuz, Schlitz oder als Vieleck gestaltet ist.

4. Stanzniet (1) nach einem der vorangehenden Ansprüche, **dadurch gekennzeichnet, dass** das Gewinde (4) als metrisches ISO-Gewinde (M), ISO-Feingewinde (MF), Trapezgewinde (Tr), Amerikanisches Gewinde (UNC), Amerikanisches Feingewinde (UNF), Amerikanisches Spezialgewinde (UNS), Rohrgewinde, Whitworth-Gewinde (BSW/WW, BS BSP/G, BSPT/R), Sägezahngewinde (SZ), Sondergewinde ohne Normung oder Links- oder Rechtsgewinde ausgebildet ist, wobei sich das Gewinde (4) vorzugsweise über mindestens 50%, 75% oder 90% der Länge des Nietschafts (3) zwischen Nietkopf (2) und Nietstanzkante (5) erstreckt, wobei das Gewinde (4) bevorzugt eingängig oder mehrgängig ausgebildet ist.

5. Stanzniet (1) nach einem der vorangehenden Ansprüche, **dadurch gekennzeichnet, dass** die Nietstanzkante (5) geschlossen oder durch die mindestens eine Nietnut (6) unterbrochen ist und/oder einen scharfkantigen oder durch eine Fase oder einen Radius gekennzeichneten Übergang von dem Nietschaft (3) zu einer Nietunterseite aufweist.

6. Stanzniet (1) nach einem der vorangehenden Ansprüche, **dadurch gekennzeichnet, dass** die mindestens eine Nietnut (6) spiralförmig, parallel oder schräg zur Nietachse (N) verläuft und/oder einen recht- oder dreieckigen oder runden Querschnitt aufweist und/oder sich über mindestens 50%, 75% oder 90% der Länge des Nietschafts (3) erstreckt und/oder sich über 1 bis 10% oder 2 bis 5% der Umfangslänge des Nietschafts (3) erstreckt.

7. Stanzniet (1) nach einem der vorangehenden Ansprüche, **dadurch gekennzeichnet, dass** mehrere Nietnuten (6) auf der Umfangsfläche des Nietschafts (3) angeordnet sind, vorzugsweise in regelmäßigen Winkelabständen um die Nietachse (N) und/oder in einem symmetrischen Muster.

8. Stanzniet (1) nach einem der vorangehenden Ansprüche, **dadurch gekennzeichnet, dass** der Außendurchmesser (D) der Nietstanzkante (5) mindestens so groß ist wie der Außendurchmesser (D) des Außengewindes (4).

9. Anordnung, umfassend mindestens zwei Bauteile (7a, 7b), die durch wenigstens einen Stanzniet (1) nach einem der vorangehenden Ansprüche verbunden sind, **dadurch gekennzeichnet, dass** der wenigstens eine Stanzniet (1) aus einem härteren Werkstoff als die mindestens zwei Bauteile (7a, 7b) besteht.

10. Verfahren zum Stanznieten mindestens zweier Bauteile (7a, 7b) unter Verwendung des Stanzniets (1) nach einem der vorangehenden Ansprüche 1 bis 8, **dadurch gekennzeichnet, dass** das Verfahren folgende aufeinanderfolgende Schritte umfasst:
Schritt I: Stanzen der Bauteile (7a, 7b) durch den Stanzniet (1), sodass der Stanzniet (1) die Bauteile (7a, 7b) durchdringt.
Schritt II: Umformen wenigstens eines der Bauteile (7a, 7b), insbesondere eines nietschaftseitigen Bauteils (7b), zur Erzeugung eines radialen Materialflusses, der in das Gewinde (4) und die mindestens eine Nietnut (6) des Stanzniets (1) eindringt, um den Stanzniet (1) vorzugsweise kraft- und formschlüssig in den Bauteilen (7a, 7b) zu verankern.

11. Verfahren nach dem vorangehenden Anspruch, **dadurch gekennzeichnet, dass** Schritt I wenigstens einen der folgenden Teilschritte umfasst:
Schritt la: Positionieren und Fixieren der Bauteile (7a, 7b) zwischen einem Niederhalter (8) und einer Matrize (10).
Schritt Ib: Bewegen des Stanzniets (1) durch einen von dem Niederhalter (8) geführten Fügestempel (9), sodass die Nietstanzkante (5) den Materialausschuss aus den Bauteilen (7a, 7b) heraustrennt.
Schritt Ic: Aufnehmen des Materialausschusses durch die Matrize (10).
Schritt Id: Herabfahren des Fügestempels (9) bis der Stanzniet (1) seine stempelseitige Endposition erreicht hat.

12. Verfahren nach einem der beiden vorangehenden Ansprüche, **dadurch gekennzeichnet, dass** Schritt II wenigstens einen der folgenden Teilschritte umfasst:
Schritt IIa: Einprägen eines Prägerings (11) der Matrize (10) in das matrizenseitige Bauteil (7b), durch synchrones Herabfahren des Fügestempels (9) und des Niederhalters (8).
Schritt IIb: Entnahme der verbundenen Bauteile (7a, 7b) nach Abheben des Niederhalters (8) und des Fügestempels (9).

13. Verfahren nach einem der drei vorangehenden Ansprüche, **dadurch gekennzeichnet, dass** es den weiteren Schritt umfasst:
Schritt III: Einleitung eines Drehmoments über das Mitnahmeprofil (2a) am Nietkopf (2) des Stanzniets (1) zum Lösen der Fügeverbindung.

## Claims

1. A punch rivet (1) for punch riveting at least tow components (7a, 7b), comprising: a rivet head (2) with a driving profile (2a); a rivet shank (3) extending from the rivet head (2) with a rivet punching edge (5) and a thread (4) arranged between the rivet punching edge (5) and the rivet head (2); **characterised in that** the rivet shank (3) has at least one rivet groove (6) which interrupts the thread (4) and, if appropriate, the rivet punching edge (5), and **in that** the diameter of a base of the at least one rivet groove (6) is equal to the thread core diameter of the thread (4).

2. The punch rivet (1) according to claim 1, **characterised in that,** the rivet head (2) is a countersunk head with a conical or spherical shape or a flat head with a cylindrical, conical or spherical shape.

3. The punch rivet (1) according to one of the preceding claims, **characterised in that,** the driving profile (2a) is designed as a hexagon socket, hexalobular socket, cross, slot or polygon.

4. The punch rivet (1) according to one of the preceding claims, **characterised in that,** the thread (4) is formed as an ISO metric thread (M), ISO fine thread (MF), trapezoidal thread (Tr), American thread (UNC), American fine thread (UNF), American special thread (UNS), pipe thread, Whitworth thread (BSW/WW, BS BSP/G, BSPT/R), sawtooth thread (SZ), special thread without standardisation or left-hand or right-hand thread, wherein the thread (4) preferably extends over at least 50%, 75% or 90% of the length of the rivet shank (3) between the rivet head (2) and the rivet punching edge (5), wherein the thread (4) is preferably single-threaded or multi-threaded.

5. The punch rivet (1) according to one of the preceding claims, **characterised in that,** the rivet punching edge (5) is closed or interrupted by the at least one rivet groove (6) and/or has a sharp-edged transition or a transition **characterised by** a chamfer or a radius from the rivet shank (3) to a rivet underside.

6. The punch rivet (1) according to one of the preceding claims, **characterised in that,** the at least one rivet groove (6) runs spirally, parallel or at an angle to the rivet axis (N) and/or has a rectangular or triangular or round cross-section and/or extends over at least 50%, 75% or 90% of the length of the rivet shank (3) and/or extends over 1 to 10% or 2 to 5% of the circumferential length of the rivet shank (3).

7. The punch rivet (1) according to one of the preceding claims, **characterised in that,** multiple rivet grooves (6) are arranged on the circumferential surface of the rivet shaft (3), preferably at regular angular intervals around the rivet axis (N) and/or in a symmetrical pattern.

8. The punch rivet (1) according to one of the preceding claims, **characterised in that,** the outer diameter (D) of the rivet punching edge (5) is at least as large as the outer diameter (D) of the external thread (4).

9. Assembly comprising at least two components (7a, 7b) which are connected by at least one punch rivet (1) according to one of the preceding claims, **characterised in that** the at least one punch rivet (1) consists of a harder material than the at least two components (7a, 7b).

10. Method for punch riveting at least two components (7a, 7b) using the punch rivet (1) according to one of the preceding claims 1 to 8, **characterised in that** the method comprises the following successive steps:
Step I: Punching the components (7a, 7b) through the punch rivet (1) so that the punch rivet (1) penetrates the components (7a, 7b).
Step II: Forming at least one of the components (7a, 7b), in particular a component (7b) on the rivet shank side, to produce a radial material flow which penetrates into the thread (4) and the at least one rivet groove (6) of the punch rivet (1) in order to anchor the punch rivet (1) preferably in a force-fit and form-fit manner in the components (7a, 7b).

11. Method according to the preceding claim, **characterised in that,** step I comprises at least one of the following sub-steps:
Step Ia: Positioning and fixing of the components (7a, 7b) between a hold-down device (8) and a die (10).
Step lb: Moving the punch rivet (1) through a joining punch (9) guided by the hold-down device (8) so that the rivet punching edge (5) separates the material waste from the components (7a, 7b).
Step Ic: Picking up the material waste through the die (10).
Step Id: Lower the joining punch (9) until the punch rivet (1) has reached its end position on the punch side.

12. Method according to the two preceding claims, **characterised in that,** step II comprises at least one of the following sub-steps:
Step Ila: Embossing of an embossing ring (11) of the die (10) into the die-side component (7b) by synchronised lowering of the joining punch (9) and the hold-down device (8).
Step IIb: Removal of the joined components (7a, 7b) after lifting the hold-down device (8) and the joining punch (9).

13. Method according to the two preceding claims, **characterised in that,** it comprises the additional following step:
Step III: Inducing of a torque via the driving profile (2a) on the rivet head (2) of the punch rivet (1) to release the joint.

## Revendications

1. Rivet auto-poinçonneur (1) permettant un rivetage auto-poinçonneur d'au moins deux composants (7a, 7b), comprenant : une tête de rivet (2) avec un profil d'entraînement (2a) ; une tige de rivet (3) s'étendant à partir de la tête de rivet (2) et comprenant un bord auto-poinçonneur (5) et un filetage (4) agencé entre le bord auto-poinçonneur (5) et la tête de rivet (2) ; **caractérisé en ce que** la tige de rivet (3) présente au moins une rainure de rivet (6) qui interrompt le filetage (4) et éventuellement le bord auto-poinçonneur (5) et **en ce que** le diamètre d'un fond de la au moins une rainure de rivet (6) est égal au diamètre de fond de filet du filetage (4).

2. Rivet auto-poinçonneur (1) selon la revendication 1, **caractérisé en ce que** la tête de rivet (2) est une tête ronde de forme conique ou sphérique ou une tête plate de forme cylindrique, conique ou sphérique.

3. Rivet auto-poinçonneur (1) selon l'une quelconque des revendications précédentes, **caractérisé en ce que** le profil d'entraînement (2a) est conçu pour être Allen, Torx, cruciforme, fendu ou carré.

4. Rivet auto-poinçonneur (1) selon l'une quelconque des revendications précédentes, **caractérisé en ce que** le filetage (4) est réalisé sous la forme d'un filetage métrique ISO (M), d'un filetage fin ISO (MF), d'un filetage trapézoïdal (Tr), d'un filetage américain (UNC), d'un filetage fin américain (UNF), d'un filetage spécial américain (UNS), d'un filetage de tube, d'un filetage Whitworth (BSW/WW, BS BSP/G, BSPT/R), d'un filetage en dents de scie (SZ), d'un filetage spécial sans normalisation ou d'un filetage à gauche ou à droite, dans lequel le filetage (4) s'étend de manière préférée sur au moins 50 %, 75 % ou 90 % de la longueur de la tige de rivet (3) entre la tête de rivet (2) et le bord auto-poinçonneur (5), dans lequel le filetage (4) est de manière préférée à filet simple ou à plusieurs filets.

5. Rivet auto-poinçonneur (1) selon l'une quelconque des revendications précédentes, **caractérisé en ce que** le bord auto-poinçonneur (5) est fermé ou interrompu par la au moins une rainure de rivet (6) et/ou présente entre la tige de rivet (3) et une face inférieure de rivet une transition à arêtes vives ou **caractérisée par** un chanfrein ou un rayon.

6. Rivet auto-poinçonneur (1) selon l'une quelconque des revendications précédentes, **caractérisé en ce que** la au moins une rainure de rivet (6) s'étend en spirale, parallèlement ou obliquement par rapport à l'axe de rivet (N) et/ou présente une section rectangulaire ou triangulaire ou ronde et/ou s'étend sur au moins 50 %, 75 % ou 90 % de la longueur de la tige de rivet (3) et/ou s'étend sur une distance comprise entre 1 et 10 % ou entre 2 et 5 % de la longueur périphérique de la tige de rivet (3).

7. Rivet auto-poinçonneur (1) selon l'une quelconque des revendications précédentes, **caractérisé en ce que** plusieurs rainures de rivet (6) sont agencées sur la surface périphérique de la tige de rivet (3), de manière préférée à des distances angulaires régulières autour de l'axe de rivet (N) et/ou selon un motif symétrique.

8. Rivet auto-poinçonneur (1) selon l'une quelconque des revendications précédentes, **caractérisé en ce que** le diamètre extérieur (D) du bord auto-poinçonneur (5) est au moins égal au diamètre extérieur (D) du filetage extérieur (4).

9. Agencement, comprenant au moins deux composants (7a, 7b) reliés grâce à au moins un rivet auto-poinçonneur (1) selon l'une quelconque des revendications précédentes, **caractérisé en ce que** le au moins un rivet auto-poinçonneur (1) est constitué d'un matériau plus dur que celui des au moins deux composants (7a, 7b).

10. Procédé de rivetage auto-poinçonneur d'au moins deux composants (7a, 7b) avec utilisation du rivet auto-poinçonneur (1) selon l'une quelconque des revendications précédentes 1 à 8, **caractérisé en ce que** le procédé comprend les étapes successives ci-dessous :
Étape I : poinçonnage des composants (7a, 7b) grâce au rivet auto-poinçonneur (1), de sorte que le rivet auto-poinçonneur (1) pénètre dans les composants (7a, 7b).
Étape II : formage d'au moins un des composants (7a, 7b), en particulier d'un composant (7b) situé du côté de la tige de rivet, afin de créer un fluage radial de matériau qui pénètre dans le filetage (4) et dans la au moins une rainure de rivet (6) du rivet auto-poinçonneur (1) afin d'ancrer le rivet auto-poinçonneur (1) dans les composants (7a, 7b) de manière préférée par complémentarité de force et de forme.

11. Procédé selon la revendication précédente, **caractérisé en ce que** l'étape I comprend au moins une des sous-étapes ci-dessous :
Étape la : positionnement et immobilisation des composants (7a, 7b) entre un serre-flan (8) et une matrice (10).
Étape Ib : déplacement du rivet auto-poinçonneur (1) grâce à un poinçon d'assemblage (9) guidé par le serre-flan (8), de sorte que le bord auto-poinçonneur (5) expulse le rebut de matériau hors des composants (7a, 7b).
Étape le : réception du rebut de matériau par la matrice (10).
Étape Id : descente du poinçon d'assemblage (9) jusqu'à ce que le rivet auto-poinçonneur (1) ait atteint sa position finale côté poinçon.

12. Procédé selon l'une quelconque des deux revendications précédentes, **caractérisé en ce que** l'étape II comprend au moins une des sous-étapes ci-dessous :
Étape Ila : estampage d'un anneau d'estampage (11) de la matrice (10) dans le composant (7b) situé côté matrice, par descente synchrone du poinçon d'assemblage (9) et du serre-flan (8).
Étape Ilb : retrait des composants (7a, 7b) reliés après enlèvement du serre-flan (8) et du poinçon d'assemblage (9).

13. Procédé selon l'une quelconque des trois revendications précédentes, **caractérisé en ce qu'**il comprend l'étape supplémentaire ci-dessous :
Étape III : introduction d'un couple au niveau de la tête de rivet (2) du rivet auto-poinçonneur (1) par l'intermédiaire du profil d'entraînement (2a) afin de desserrer la liaison d'assemblage.
